# EUROPEAN PATENT SPECIFICATION

(11) **EP 1 004 188 B1**
(45) Date of publication and mention of the grant of the patent: **27.09.2006**
(21) Application number: 98933666.4
(22) Date of filing: 06.07.1998
(51) Int. Cl.: H04L 12/58

(54) **ELECTRONIC MAIL**
ELEKTRONISCHE POST
COURRIER ELECTRONIQUE

(30) Priority: 09.07.1997 FI 972911
(43) Date of publication of application: 31.05.2000
(73) Proprietor: TELEFONAKTIEBOLAGET LM ERICSSON (publ), 164 83 Stockholm (SE)
(72) Inventor: MELEN, Björn, FIN-02320 Espoo (FI); HYVÖNEN, Mika, FIN-00390 Helsinki (FI)
(74) Representative: Kärkkäinen, Veli-Matti
(86) International application number: PCT/FI1998/000574
(87) International publication number: WO 1999/003238

(56) References cited:
- EP-A2- 0 606 720
- US-A- 5 483 352
- US-A- 5 493 564
- US-A- 5 537 543
- US-A- 5 590 178
- US-A- 5 768 505

## Description

### Field of the invention

The present invention relates to electronic mail, and more particularly to an electronic mail system and method adapted to operate in an interlinked relationship with a telephone system and further to an electronic mail server.

### Background of the invention

Letters, telephones, radio connections, telexes and facsimile machines have been used as primary means for communicating and exchanging information between persons at distant locations. Nowadays, however, with increasing processing capabilities and decreasing prices of computers, a computer networking has been developing rapidly, and an use of electronic mail (e-mail) kind of computer based service has gained increasing popularity. The Electronic Mail (email) is a system whereby a computer user can exchange messages with other computer users (or groups of users) via a communications network. The Electronic mail is one of the most popular uses of the Internet. Individual users communicate by using application programs, such as electronic mail, Telnet and FTP. A prevailing protocol used for delivering e-mail messages between mail servers in the Internet is the SMTP protocol, which is described in detail in Internet standard RFC 821, Simple Mail Transfer Protocol. The Electronic mail has also found widespread use in offices and homes and also therebetween, as it has an access to the services provided by the communications network, via e.g. telephone network and Internet. The E-mail has the advantage that messages can be sent like letters but in an electronic form at any convenient time. The receiver can then view the message in any appropriate time.

Information transmitted by the email is visually recognisable information like a letter. The e-mail is mainly provided by two main parts, i.e. Header and Body fields. A detailed description of e-mail message syntax and structure is given in Internet standard RFC 822, Standard for the format of ARPA Internet text messages. A part of the information received in the mail message header part depends on the service provider and/or the operator and/or the used programs. The user can configure a certain part of the information the user/service provider/operator wants to send within the message header and what will be shown to the receiver.

### Summary of the invention

The information in the header field contains the originating server name but not the sender information of the host name, i.e. the name of the computer. It does not say anything to the receiver as he/she is not familiar with the host names as such. They are usually received by the mail system. E.g. in case of dynamic address allocation the sender can get an artificial host name depending on the IP address the user gets. Especially this has been recently enhanced as the number of the IP addresses in use is limited. Thus it is possible for a person to stay unknown or anonymous when sending the messages or at least there can be hundreds or thousands of users who can use the same IP addresses. This has been a problem as the messages may contain information which might only block the mail boxes or can include "forbidden" or "illegal" information. Also other reasons exist for the need of obtaining more precise sender information. Therefore it is necessary to know the sender information better. Also, even in case there is a more precise information of the sender, it would be advisable to have some further information e.g. in order to be able to contact the sender.

Therefore, it is an object of the invention to provide a new system and a method for the mail receivers and/or the communications system to identify the sender information of the mail.

It is a further object of the invention to provide a system and a method which uses the A-number information in the mail system as identification information received from the number which originated the call. It is another object to form an unique and informative communications system.

The present invention discloses a method and a system to use an electronic mail system as a part of an interactive system which the users can easily reach and in which the contact sender information is shown in a simple manner.

According to a first aspect of the present invention there is provided a system for communicating between computer terminals by means of electronic mail, the system comprising:
a plurality of terminals coupled together through at least one data communications network; and
a plurality of electronic mail servers located in the data communications network and arranged to route electronic mail messages between said terminals, each mail server being arranged to append to a received electronic mail message an identifier identifying a server from which the message was last transmitted,
wherein for a given mail message the first mail server in the transmission route is arranged to append to the message a fixed identifier which uniquely identifies the originating terminal.

According to a second aspect of the present invention there is provided a method of communicating between computer terminals by means of electronic mail, the method comprising routing electronic mail messages between two terminals coupled to a data communications network, wherein each mail server appends to a received electronic mail message an identifier identifying the server from which the message was last transmitted, and wherein for a given mail message the first mail server in the transmission route appends to the message a fixed identifier which uniquely identifies the originating terminal.

According to a third aspect of the present invention there is provided a mail server for delivering an electronic mail between at least two terminals in a communication system. Said mail server comprises means for receiving the mail through the communication system into the mailserver and means for appending to a received electronic mail message an identifier identifying the host from which the message was last transmitted, wherein for a given mail message said means for appending an identifier to a message is arranged to append to the message a fixed identifier which uniquely identifies the originating terminal, when the server is the first mail server in the transmission route.

The invention provides an easy and reliable manner for obtaining precise information about the actual sender of a message. The arrangement is such that the message may be transmitted through various mail servers, and still the information about the origin of the message is still available.

The above disclosed and other objects, features and advantages obtained by the invention will become evident from the following description of the exemplifying embodiments of the present invention when taken together with the annexed drawings.

### Brief description of the drawings

Figure 1 shows an example of a network comprising electronic mailing system.
Figure 2 shows a flow diagram of the functional steps of the invention.
Figure 3 shows an example of the header part of the message form which may be displayed to the receiver.

### Detailed description of the drawings

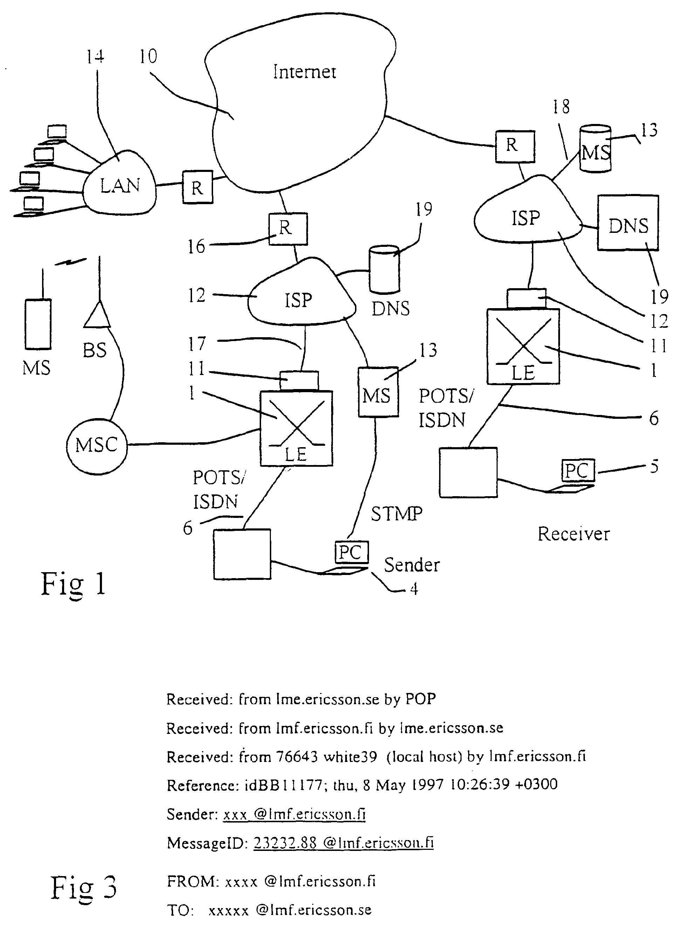

Referring now to the Figure 1, a block diagram of a part of a public switched telephone network (PSTN) is disclosed comprising a plurality of local exchanges 1 and a plurality of transit exchanges (not shown). The local exchanges and the transit exchanges are interconnected with each other by trunklines (not shown). The trunk lines also provide interconnections between the local exchanges 1 and the transit exchanges themselves. Each local exchange 1 is also connected to a plurality of subscribers 4, 5 via subscriber lines 6. Although only two subscribers 4, 5 are shown to be the users of the electronic mail, it will be understood that many more subscriber connections are supported at each local exchange or transit exchange, respectively.

At least one local exchange 1 and/or transit exchange is connected to the Internet 10 via an Access server 11 having interfaces to work towards the users 4 and to the data communications network 10 for connecting the user 4 to the data communications network, e.g. the Internet 10, e.g. through an Internet service Provider 12 connected to the mail server 13 or the like by a data transmission link 18. There are connections 17 (e.g. Ethernet) from the LAN (Local Area Network) of ISP (Internet Service Provider) 12 or the connections are through a fixed connection from LAN network 15 of the company to the Domain Name Server 19 (DNS). A domain is a hierarchically structured global character string address of a host computer in the mail system.

The desired destination of the user 4, 5 is reached through the Internet service provider 12 which can be connected through the telephone exchange 1 and is having an access to the Internet 10. Although only one exemplifying LAN arrangement 14 having multiple users (not shown) and two users 4, 5 connected through the Internet service provider 12 and through provider's LAN arrangement for accessing the Internet 10 are shown, it will be understood that many more users could be supported by the exchanges 1 and the Internet service providers 12 which are connected further by the routers 16 to the Internet 10.

The subscribers 4, 5 have each a terminal for communication. It will be recognised that the operations are basically the same for communication between three or more users. The Mailbox is included in the mail server 13. The Mailbox normally consists of the host and user specifications. The standard mailbox naming convention is defined to be "user@domain". Additionally, the Mailbox can be "container" in which the mail is stored, usually only temporarily. The electronic mail server 13 comprises a central processing unit (CPU) for processing the tasks of the mail system, a terminal interface and a storage.

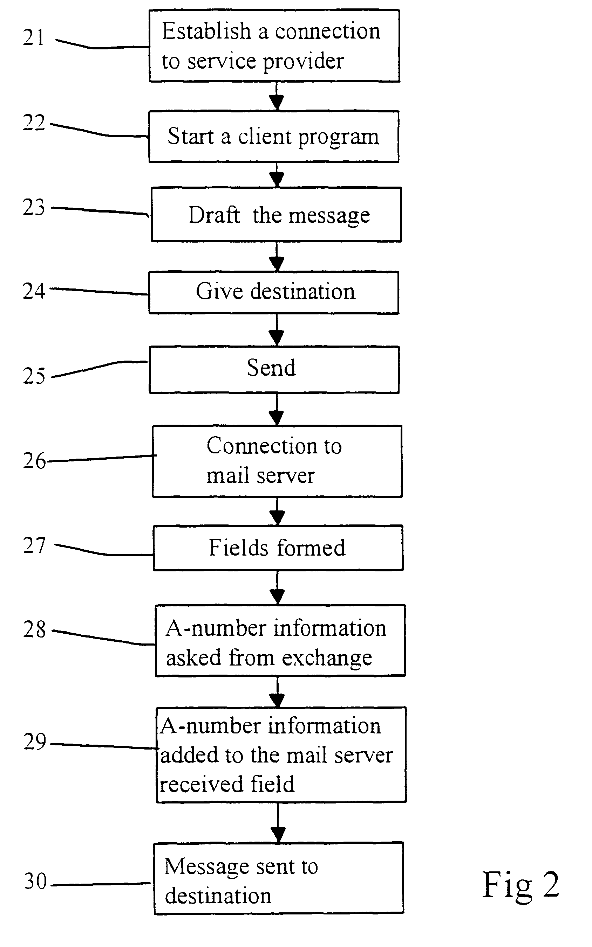

In the FIG. 1 the personal computer 4 is logged in to the electronic mail server 13 via the network arrangement 14. FIG. 2 is a basic flowchart illustrating the sequence of operations performed in each terminal 4 for communication with the electronic mail server 13. Usually the service provider 12 is arranged between the exchange 1 and the data network 10, which provides the connections to e.g. the home user 4 and to which the mail server 13 is connected through the service provider's LAN17.

Only two service providers 12 and two mail servers 13 are shown, but it is understood that there might be a number of corresponding providers and servers which can communicate with each other. Each terminal 4 goes through the operations shown in FIG. 2 to display the mail addressed to the terminal etc. The operating procedure is known to the user from the principles thereof. It is evident that many other users, terminals, and telephones can be connected to the system and that also they can use the system and method of the invention.

A diagram in FIG. 3 shows an example of the electronic mail document format which is read by the receiver 5 after the user 4 has sent the message and the receiver has retrieved the message. The electronic mail message of this format is made up of a header and a text, the header of FIG. 3 consisting of a "From" field indicating the originator, a "To" field indicating the addressee, a field indicating the date and clock, "Message ID" field indicating the electronic mail ID (identity), and a "Reference ID" indicating the related electronic mail ID. Other fields are also possible and other fields can be added. Some fields are not visible to the user but only to the mail system. E.g. such a field like "Received:" comprising a local host name and server name, for example "xxxx@lmf.ericsson.fi". Even though it might not be shown to the user, it contains information which cannot be manipulated by the user as it is received from the communications system. Because of this it is valuable when identifying the origin of the mail as the user cannot affect to that field.

The email address is e.g. the domain-based or UUCP address that is used to send electronic mail to a specified destination. UUCP was initially a program run under the UNIX operating system that allowed one UNIX system to send files to another UNIX system via dial-up phone lines. Today, the term UUCP is more commonly used to describe such large international network which uses the UUCP protocol to pass news and electronic mail.

In FIG. 3 the Received field: from 76643 white39 (local host) by lmf.ericsson.fi means that "white39" is the host name of the terminal 4, which the system has changed in the inverse table of the DNS from the IP address to the corresponding host name. The number "76643" is the telephone number retrieved from the telephone exchange in that specific call connection. It is dynamically changed in the inverse table. "lmf.ericsson.fi" describes the name of the mail server 13. Next Received field contains information: from lmf.ericsson.fi by lme.ericsson.se. This information is added by the mail server 13 of the receiver 5. When the receiver reads his/her messages a further field can be added as Received: from lme.ericsson.se by POP, which means the server name and the protocol name post office protocol (POP) which is used for reading the mail messages from the mail server 13. An example for an model for the inverse table of the DNS of one Internet service provider is shown in the following table:

**Table**

| IP address | Host name | Telephone number |
|---|---|---|
| 121.160.32.1 | white1 | 93217 |
| 121.160.32.2 | white2 | 93345 |
| 121.160.32.3 | white3 | 93171 |
| . | | |
| . | | |
| . | | |
| 121.160.32.39 | white39 | 76643 |
| . | | |
| . | | |

The table contains the information about the IP addresses in use by the service provider and the corresponding host names. The telephone number can be added as one alternative in the table. Instead of changing the host name, the telephone number (A-number) is taken into the field or with the host name as in FIG. 3 (76643).

Domain Name System (DNS) is a general purpose distributed, replicated, data query service. The principal use thereof is the lookup of host IP addresses based on host names and vice versa in order to send the mail to the right destination. The style of host names presently used in the Internet is called "domain name", because they are the style of names used to look up anything in the DNS. Some important domains are: .COM (commercial), .EDU (educational), .NET (network operations), .GOV (U.S. government), and .MIL (U.S. military). Most countries do also have a domain of their own. For example, .US (United States), .UK (United Kingdom), .AU (Australia).

A mail server is a software program that distributes files or information in response to requests sent via the email. Internet related examples include Almanac and netlib. The mailserver sends the received mails according to certain time slots but also immediately when it has received the command. As an example, Simple Mail Transfer Protocol (SMTP) is a protocol commonly used to transfer the electronic mail between computers. It is a server-to-server protocol, so other protocols are used to access the messages, e.g. such as the post office protocol (POP). The referred SMTP is closely described in the IETF standard RFC 821. The SMTP design is based on the model of the communication: as the result of a user mail request, the sender-SMTP establishes a two-way transmission channel to the receiver-SMTP. The receiver-SMTP may be either the ultimate destination or an intermediate. SMTP commands are generated by the sender-SMTP and sent to the receiver-SMTP. SMTP replies are sent from the receiver-SMTP to the sender-SMTP in response to the commands. In the receiver-SMTP process the mail is transferred in cooperation with a sender-SMTP process. It waits for a connection to be established via the transport service. It receives the SMTP commands from the sender-SMTP, sends replies, and performs the specified operations. In a sender-SMTP process the mail is transferred in cooperation with a receiver-SMTP process. A local language may be used in the user interface command/reply dialogue. The sender-SMTP initiates the transport service connection. It initiates the SMTP commands, receives, replies, and governs the transfer of the mail. The transmission channel can be a full-duplex communication path between a sender-SMTP and a receiver-SMTP for the exchange of commands, replies and mail text.

Referring to FIG. 2, when the user e.g. from home wants to use mail services he/she has (step 21) to establish a connection to the service provider by calling to the service provider's number, whereafter Point-to-Point Protocol is used for setting up the connection. In step 22 he/she starts the client program which usually is already in his own computer. He/she starts the program, and in step 23 writes the message, gives the destination address ("fills in" name and domain name) in step 24 and clicks the send-button in step 25.
As already explained, the message comprises two parts, the header part and body part. The header consists of all of the text lines from the first line until a blank line, as illustrated in the example of FIG. 3. The body is everything following the first blank line up to the end of the file comprising the "real" message the user wants to send. The first blank line is a part of neither. The header contains the information of the e-mail address of the sender, which e-mail address is composed of two parts, namely the user account and the mail server name, i.e. the ultimate destination host as well as the destination mailbox name, e.g. john.melen@ericsson.AU. The email address of the receiver consists of user account or an alias name and mail server address and message-ID and one or more optional fields.

It is possible that there are many servers between the sender and receiver. It is possible to find from the Header part a so called Received field e.g. from xxxxx by vvvvvvv including every hop the mail system does from every visited server. The user cannot influence this information, but it is added by every server used in the transmission. Earlier when the fixed addresses were used this information told what was the computer from which the message was sent. Nowadays, when dynamic address allocation is used more and more for this kind of connection, it is impossible afterwards or at least very difficult to trace who really used the certain address at the time the message was sent.

The used program establishes a SMTP connection to the mail server, step 26. Usually the user needs to call to the Internet service provider with whom he has the agreement and which manages the addresses of email addresses in his mail server or servers (The ISP can have many mail servers which are arranged e.g. in a hierarchical order. Thus, as the user is sending something, the message will go through many mail servers and also through mail servers of other ISPs.)
The mail server generates then so called "received" - field which includes the name of the client behind which the working station is and the mail server name, step 27. However, this information might not be extremely valuable, as the message sender may be who one else accessed to the mail server from e.g. the telephone exchange or the service provider client, especially when the dynamic allocation is concerned. The origin of the sender might be known only from the field "user name" which is configurable by the user.

However', the call connection makes it possible to use the calling number (A-number) information as an identification of the mail sender so that the information of the IP address and telephone number are updated when the call is connected, either by means of the telephone exchange or a computer program asking for the number. The mail server may ask for the number from the telephone exchange. The IP address and said telephone number are dynamically combined. Thus the actual telephone number is known by the telephone exchange in step 28. It is also useful to have a fixed IP address. Then the user has always the same IP address which always corresponds the same telephone number. The allocation information is sent to the mail server as a request having now the information of the telephone number which informs from which telephone address the message has been sent. The telephone number of the sender (host) can be added to the received -field, or it can be saved in the mail server for proper use so that the IP (Internet Protocol) address and the respective telephone number is identified, step 29. In one alternative the telephone number can also replace the host name. Finally, the message is sent to the final destination, step 30.

This system is very useful as the IP addresses are changed dynamically and the IP address cannot specify the user, and thus, when combining the above data, the inventive system can recognise the user in a similarly safe way as in the telephone network. The A-number 76643 of the user 4 is put e.g. in the place of "white39" in the mail information. When call connection is concerned and the user is identified by the fixed or dynamically allocated IP address, the host name information is changed or connected or replaced by the A subscriber identification. The A subscriber information, i.e. the user 4 is the phone number from which the connection has occurred and from which the E-mail is then sent. This function thus makes it possible to trace the E-mail sender independently on the fields the user could manipulate or change.

It will further be understood that the connection to the network can be taken also from a mobile terminal MS connected to the computer via air interface and using a base station BS and mobile switching centres MSCs, as is shown in figure 1. The respective transmission links are arranged between those devices. There is also a transmission link connection between the afore mentioned mobile switching centre and the exchanges 1. Thus the invention is not limited only to the fixed network services.

The telephone number may also be placed in the host name field.

It will be appreciated by persons of skill in the art that various modifications may be made to the above described embodiments without departing from the scope of the present invention. For example, rather than identifying the originating terminal using the terminal's A-number, some other fixed identifier may be used (by "fixed" is meant here that the user does not have the possibility to change the identifier). For example, instead of the A-number, a user log-on username may be included in the mail message header part.

## Claims

1. A system for communicating between computer terminals by means of electronic mail, the system comprising:
a plurality of terminals (4, 5) coupled together through at least one data communications network (10); and
a plurality of electronic mail servers (13) located in the data communications network and arranged to route electronic mail messages between said terminals, each mail server being arranged to append to a received electronic mail message an identifier identifying a server from which the message was last transmitted,
**characterized in that** for a given mail message the first mail server in the transmission route is arranged to append to the message a fixed identifier which uniquely identifies the originating terminal.

2. A system according to claim 1 and comprising transmission means for transmitting said fixed identifier to said first mail server (13) from either the originating terminal (4) or from a communication node (1) connecting the originating terminal to said first mail server, the transmission of the fixed identifier being separate from the transmission of the mail message.

3. A system according to claim 2 and comprising a telephone network (6, 1, 11) arranged to couple the originating terminal to said data communications network (10), said communication node (1) being an exchange of the telephone network and said fixed identifier being the identifier of the connection point associated with the subscriber line (6) of the originating terminal.

4. A system according to claim 2, wherein said fixed identifier.is a username allocated to the originating terminal and entered by a user as part of a log-on stage.

5. A system according to claim 3, wherein the identifier of the connection point associated with the subscriber line is a telephone number.

6. A system as claimed in claim 3, wherein information on an IP address and the identifier of the connection point are updated as the call is connected either by means of the telephone exchange (1) or a computer program asking for the identifier, the said identifier corresponding the IP address is sent to said mail server (13) as a request, whereafter said mail server is provided with the information on the identifier which informs from which subscriber line (6) the message was sent.

7. A method of communicating between computer terminals by means of electronic mail, the method comprising routing electronic mail messages between two terminals (4, 5) coupled to a data communications network (10), wherein each mail server (13) appends to a received electronic mail message an identifier identifying the server from which the message was last transmitted, **characterized in that** for a given mail message the first mail server in the transmission route appends to the message a fixed identifier which uniquely identifies the originating terminal.

8. A method according to claim 7, wherein said method further comprises requesting telephone number information corresponding to the IP address of the originating terminal from an exchange (28), providing the telephone number information with the mail server information (29), and forwarding the message to the destination (30).

9. A method as claimed in claim 8, wherein said method further comprises a step of combining the IP address and the telephone number information during the call connection.

10. A method as claimed in claim 8, wherein said method further comprises a step of locating a sender host by means of the telephone number information.

11. A method as claimed in claim 8, wherein said method further comprises a step of replacing a sender host name with the telephone number of the sender.

12. A method as claimed in claim 8, wherein said method further comprises a step of providing the header part of the message with the telephone number received from the exchange.

13. A method as claimed in claim 8, wherein the telephone number is in a host name field.

14. A mail server for delivering an electronic mail between at least two terminals (4, 5) in a communication system, said mail server (13) comprising means for receiving the mail through the communication system into the mail server and means for appending to a received electronic mail message an identifier identifying the host from which the message was last transmitted, **characterized in that** for a given mail message said means for appending an identifier to a message is arranged to append to the message a fixed identifier which uniquely identifies the originating terminal, when the server is the first mail server in the transmission route.

## Patentansprüche

1. Ein System zum Kommunizieren zwischen Computerterminals mittels elektronischer Mail, wobei das System umfasst:
eine Mehrzahl von Terminals (4, 5), die zusammen gekoppelt sind durch wenigstens ein Datenkommunikationsnetzwerk (10); und
eine Mehrzahl von elektronischen Mailservern (13), die in dem Datenkommunikationsnetzwerk platziert sind und angeordnet sind zum Routen elektronischer Mailnachrichten zwischen den Terminals, wobei jeder Mailserver angeordnet ist, um an eine empfangene elektronische Mailnachricht einen Identifizierer anzuhängen, der einen Server identifiziert von dem die Nachricht als letztes übermittelt wurde,
**dadurch gekennzeichnet, dass** für eine gegebene Mailnachricht der erste Mailserver in der Übermittlungsroute angeordnet ist, um an die Nachricht einen festen Identifizierer anzuhängen, der den Herkunftsterminal einzigartig identifiziert.

2. System gemäß Anspruch 1 und umfassend ein Übermittlungsmittel zum Übermitteln des festen Identifizierers an den ersten Mailserver (13) von entweder dem Herkunftsterminal (4) oder von einem Kommunikationsknoten (1), der den Herkunftsterminal mit dem ersten Mailserver verbindet, wobei die Übermittlung des festen Identifizierers getrennt ist von der Übermittlung der Mailnachricht.

3. System gemäß Anspruch 2 und umfassend ein Telefonnetzwerk (6, 1, 11), das angeordnet ist zum Koppeln des Herkunftsterminals mit dem Datenkommunikationsnetzwerk (10), wobei der Kommunikationsknoten (1) eine Vermittlung des Telefonnetzwerkes ist und der feste Identifizierer der Identifizierer des Verbindungspunktes ist, der zu der Teilnehmerleitung (6) des Herkunftsterminals gehört.

4. System gemäß Anspruch 2, wobei der feste Identifizierer ein Benutzername ist, der dem Herkunftsterminal zugewiesen ist und durch einen Benutzer als ein Teil einer Anmeldestufe eingegeben wird.

5. System gemäß Anspruch 3, wobei der Identifizierer des zu der Teilnehmerleitung zugehörigen Verbindungspunktes eine Telefonnummer ist.

6. System gemäß Anspruch 3, wobei eine Information bezüglich einer IP-Adresse und der Identifizierer des Verbindungspunktes aktualisiert werden, wenn der Anruf entweder mittels der Telefonvermittlung (1) oder eines Computerprogramms verbunden wird, das nach dem Identifizierer fragt, wobei der zu der IP-Adresse zugehörige Identifizierer an den Mailserver (13) gesendet wird als eine Anfrage, wonach der Mailserver mit der Information bezüglich des Identifizierers bereitgestellt wird, der informiert über welche Teilnehmerleitung (6) die Nachricht gesendet wurde.

7. Verfahren einer Kommunikation zwischen Computerterminals mittels elektronischer Mail, wobei das Verfahren ein Routen von elektronischen Mailnachrichten zwischen zwei Terminals (4, 5) umfasst, die mit einem Datenkommunikationsnetzwerk (10) gekoppelt sind, wobei jeder Mailserver (13) an eine empfangene elektronische Mailnachricht einen Identifizierer anhängt, der den Server identifiziert, von dem die Nachricht als letztes übermittelt wurde, **dadurch gekennzeichnet, dass** für eine gegebene Mailnachricht der erste Mailserver in der Übermittlungsroute an die Nachricht einen festen Identifizier anhängt, der den Herkunftsterminal einzigartig identifiziert.

8. Verfahren gemäß Anspruch 7, wobei das Verfahren ferner ein Anfragen einer Telefonnummerinformation von einer Vermittlung (18)umfasst, zugehörig zu der IP-Adresse des Herkunftsterminals, der die Telefonnummerninformation mit der Mailserverinformation (29) bereitstellt und die Nachricht an das Ziel (30) weiterleitet.

9. Verfahren gemäß Anspruch 8, wobei das Verfahren ferner einen Schritt zum Kombinieren der IP-Adresse und der Telefonnummerninformation während der Anrufverbindung umfasst.

10. Verfahren gemäß Anspruch 8, wobei das Verfahren ferner einen Schritt zum Lokalisieren eines Senderhosts mittels der Telefonnummerninformation umfasst.

11. Verfahren gemäß Anspruch 8, wobei das Verfahren ferner einen Schritt zum Ersetzen eines Sendehostnamens mit einer Telefonnummer des Senders umfasst.

12. Verfahren gemäß Anspruch 8, wobei das Verfahren ferner einen Schritt zum Bereitstellen des Kopfteils der Nachricht mit der Telefonnummer umfasst, die von der Vermittlung empfangen wurde.

13. Verfahren gemäß Anspruch 8, wobei die Telefonnummer sich in einem Hostnamenfeld befindet.

14. Mailserver zum Liefern einer elektronischen Mail zwischen wenigstens zwei Terminals (4, 5) in einem Kommunikationssystem, wobei der Mailserver (13) Mittel umfasst zum Empfangen der Mail über das Kommunikationssystem in dem Mailserver, und Mittel, um an eine empfangene elektronische Mailnachricht einen Identifizierer anzuhängen, der den Host identifiziert, von dem die Nachricht als letztes übermittelt wurde, **dadurch gekennzeichnet, dass** für eine gegebene Mailnachricht das Mittel zum Anhängen eines Identifizierers an eine Nachricht angeordnet ist, um an die Nachricht einen festen Identifizierer anzuhängen, der den Herkunftsterminal einzigartig identifiziert, wenn der Server der erste Mailserver in der Übermittlungsroute ist.

## Revendications

1. Système de communication entre des terminaux informatiques au moyen de courrier électronique, le système comprenant :
une pluralité de terminaux (4, 5) couplés ensemble par au moins un réseau de communication de données (10) ; et
une pluralité de serveurs de courrier électronique (13) situés dans le réseau de communication de données et agencés pour router des messages de courrier électronique entre lesdits terminaux, chaque serveur de courrier étant agencé pour concaténer à un message de courrier électronique reçu un identificateur qui identifie un serveur à partir duquel le message a été émis pour la dernière fois,
**caractérisé en ce que**, pour un message de courrier donné, le premier serveur de courrier sur la route de transmission est agencé pour concaténer au message un identificateur fixe qui identifie de manière univoque le terminal d'origine.

2. Système selon la revendication 1 et comprenant un moyen de transmission destiné à transmettre ledit identificateur fixe audit premier serveur de courrier (13), soit depuis le terminal d'origine (4), soit depuis un noeud de communication (1) connectant ledit terminal d'origine audit premier serveur de courrier, la transmission de l'identificateur fixe étant séparée de la transmission du message de courrier.

3. Système selon la revendication 2 et comprenant un réseau téléphonique (6, 1, 11) agencé pour coupler le terminal d'origine audit réseau de communication de données (10), ledit noeud de communication (1) étant un central du réseau téléphonique et ledit identificateur fixe étant l'identificateur du point de connexion associé à la ligne d'abonné (6) du terminal d'origine.

4. Système selon la revendication 2, dans lequel ledit identificateur fixe est un nom d'utilisateur attribué au terminal d'origine et saisi par un utilisateur dans le cadre d'une étape d'ouverture de session.

5. Système selon la revendication 3, dans lequel l'identificateur du point de connexion associé à la ligne d'abonné est un numéro de téléphone.

6. Système selon la revendication 3, dans lequel des informations sur une adresse IP et l'identificateur du point de connexion sont mis à jour lorsque l'appel est connecté, soit par le central téléphonique (1), soit par un programme d'ordinateur qui demande l'identificateur, ledit identificateur correspondant à l'adresse IP étant envoyé audit serveur de courrier (13) sous la forme d'une demande, après quoi ledit serveur reçoit les informations sur l'identificateur, ce qui l'informe sur la ligne d'abonné (6) qui a envoyé le message.

7. Procédé de communication entre des terminaux informatiques au moyen de courrier électronique, le procédé comprenant le routage de messages de courrier électronique entre deux terminaux (4, 5) couplés à un réseau de communication de données (10), dans lequel chaque serveur de courrier électronique (13) concatène à un message de courrier électronique reçu un identificateur qui identifie le serveur à partir duquel le message a été émis pour la dernière fois, **caractérisé en ce que**, pour un message de courrier donné, le premier serveur de courrier sur la route de transmission concatène au message un identificateur fixe qui identifie de manière univoque le terminal d'origine

8. Procédé selon la revendication 7, dans lequel ledit procédé comprend en outre les étapes consistant à demander à un central (28) des informations de numéro de téléphone correspondant à l'adresse IP du terminal d'origine, fournir les informations de numéro de téléphone avec les informations de serveur de courrier (29) et acheminer le message vers la destination (30).

9. Procédé selon la revendication 8, dans lequel ledit procédé comprend en outre une étape consistant à combiner l'adresse IP et les informations de numéro de téléphone pendant la connexion de l'appel.

10. Procédé selon la revendication 8, dans lequel ledit procédé comprend en outre une étape consistant à localiser un ordinateur hôte émetteur à l'aide des informations de numéro de téléphone.

11. Procédé selon la revendication 8, dans lequel ledit procédé comprend en outre une étape consistant à remplacer le nom de l'ordinateur hôte émetteur par le numéro de téléphone de l'émetteur.

12. Procédé selon la revendication 8, dans lequel ledit procédé comprend en outre une étape consistant à placer dans la partie d'en-tête du message le numéro de téléphone reçu du central.

13. Procédé selon la revendication 8, dans lequel le numéro de téléphone est dans une zone de nom d'ordinateur hôte.

14. Serveur de courrier destiné à remettre un courrier électronique entre au moins deux terminaux (4, 5) dans un système de communication, ledit serveur de courrier (13) comprenant un moyen destiné à recevoir le courrier sur le serveur de courrier via le système de communication et un moyen destiné à concaténer à un message de courrier électronique reçu un identificateur qui identifie l'ordinateur hôte à partir duquel le message a été émis pour la dernière fois, **caractérisé en ce que**, pour un message de courrier donné, ledit moyen destiné à concaténer un identificateur à un message est agencé pour concaténer au message un identificateur fixe qui identifie de manière univoque le terminal d'origine, lorsque le serveur est le premier serveur de courrier sur la route de transmission.
